# EUROPÄISCHE PATENTANMELDUNG

(11) **EP 3 305 390 A1**
(43) Veröffentlichungstag der Anmeldung: **11.04.2018**
(21) Anmeldenummer: 16002149.9
(22) Anmeldetag: 06.10.2016
(51) Int. Cl.: B01D 1/00, F17C 9/02, F17C 9/04, F17C 7/04, B01B 1/00

(54) **WASSERBADVERDAMPFER UND VERFAHRENSTECHNISCHE ANLAGE**

(71) Anmelder: Linde Aktiengesellschaft, 80331 München (DE)
(72) Erfinder: BLUM, Ingomar, 83342 Tacherting (DE); WOLFERSTETTER, Clemens, 83308 Trostberg (DE); BUCHNER, Simon, 84524 Neuötting (DE)
(74) Vertreter: Meilinger, Claudia Sabine

(57) **Zusammenfassung**

Ein Wasserbadverdampfer (3) für eine verfahrenstechnische Anlage (1), mit einem Mantel (4), einem innerhalb des Mantels (4) angeordneten Kernrohr (12), einem zwischen dem Kernrohr (12) und dem Mantel (4) angeordneten Rohrbündel (19), einer ersten Heizeinrichtung (31) zum Erwärmen des Rohrbündels (19), einer zweiten Heizeinrichtung (36) zum Erwärmen des Rohrbündels (19) und einer Umschalteinrichtung (42) zum wahlweisen Zuschalten der Heizeinrichtungen (31, 36), so dass im Betrieb des Wasserbadverdampfers (3) eine Erwärmung des Rohrbündels (19) wahlweise mit Hilfe der ersten Heizeinrichtung (31) oder der zweiten Heizeinrichtung (36) erfolgt.

## Beschreibung

Die Erfindung betrifft einen Wasserbadverdampfer für eine verfahrenstechnische Anlage und eine verfahrenstechnische Anlage mit einem derartigen Wasserbadverdampfer.

Mit Hilfe von sogenannten Wasserbadverdampfern können verflüssigte Gase, wie Sauerstoff, Stickstoff, Argon, Ethylen, Propylen oder Erdgas, verdampft werden. Wasserbadverdampfer werden insbesondere in petrochemischen und kryotechnischen Anlagen eingesetzt. Als Heizenergie wird hierbei die Abwärme von Wasser, Dampf oder elektrische Energie verwendet. Für den Fall, dass die bevorzugte Form der Heizenergie ausfällt, ist es erforderlich, den Wasserbadverdampfer umzubauen, um diesen beispielsweise anstatt mit der Abwärme von Dampf mit der Abwärme von Wasser zu beheizen.

Vor diesem Hintergrund besteht die Aufgabe der vorliegenden Erfindung darin, einen verbesserten Wasserbadverdampfer zur Verfügung zu stellen.

Demgemäß wird ein Wasserbadverdampfer für eine verfahrenstechnische Anlage vorgeschlagen. Der Wasserbadverdampfer umfasst einen Mantel, ein innerhalb des Mantels angeordnetes Kernrohr, ein zwischen dem Kernrohr und dem Mantel angeordnetes Rohrbündel, eine erste Heizeinrichtung zum Erwärmen des Rohrbündels, eine zweite Heizeinrichtung zum Erwärmen des Rohrbündels und eine Umschalteinrichtung zum wahlweisen Zuschalten der Heizeinrichtungen, so dass im Betrieb des Wasserbadverdampfers eine Erwärmung des Rohrbündels wahlweise mit Hilfe der ersten Heizeinrichtung oder der zweiten Heizeinrichtung erfolgt.

Dadurch, dass zwischen den beiden Heizeinrichtungen mit Hilfe der Umschalteinrichtung umgeschaltet werden kann, ist ein Umbau des Wasserbadverdampfers beim Ausfall einer der beiden Heizeinrichtungen nicht erforderlich. Beispielsweise kann der Wasserbadverdampfer mit Dampf oder Warm-/ Kaltwasser ohne Umbaumaßnahmen und ohne Unterbrechung der Versorgung betrieben werden. Weiterhin ist bei dem beschriebenen Wasserbadverdampfer ein Backup-System für die Heizenergie gegeben. Ein Wechsel der Heizenergie während des Betriebs des Wasserbadverdampfers ist ohne Unterbrechung der Versorgung möglich. Hierdurch sind bauliche Veränderungen an dem Wasserbadverdampfer während des Betriebs verzichtbar.

Darunter, dass die Umschalteinrichtung dazu eingerichtet ist, wahlweise die Heizeinrichtungen zuzuschalten, ist zu verstehen, dass mit Hilfe der Umschalteinrichtung entweder die erste Heizeinrichtung oder die zweite Heizeinrichtung einschaltbar oder abschaltbar ist. Optional kann die Umschalteinrichtung auch so ausgelegt sein, dass diese dazu eingerichtet ist, beide Heizeinrichtungen gleichzeitig zuzuschalten. Jede Heizeinrichtung weist bevorzugt eine Umwälzpumpe auf, die zum Zuschalten der jeweiligen Heizeinrichtung aktiviert wird, während die Umwälzpumpe der anderen Heizeinrichtung deaktiviert wird. Alternativ kann die Umschalteinrichtung auch ein Dreiwegeventil zum Zuschalten der Heizeinrichtungen umfassen.

Gemäß einer Ausführungsform weist die erste Heizeinrichtung eine Dampflanze zum Erwärmen von in dem Wasserbadverdampfer aufgenommenem Wasser auf.

Der Wasserbadverdampfer weist einen Mantel auf, der mit Wasser gefüllt ist. Die Dampflanze reicht in das Wasser und düst Dampf direkt in das Wasser ein, um dieses zu erwärmen. Der Wasserbadverdampfer kann mehrere derartige Dampflanzen umfassen.

Gemäß einer weiteren Ausführungsform weist die erste Heizeinrichtung einen Wasserkreislauf mit einer Umwälzpumpe zum Umwälzen des mit Hilfe der Dampflanze erwärmten Wassers auf.

Mit Hilfe der Umwälzpumpe kann das erwärmte Wasser entgegen einer Schwerkraftrichtung gefördert werden. Das nach oben geförderte Wasser strömt dann innerhalb des Mantels in der Schwerkraftrichtung nach unten über das Rohrbündel, um das zu verdampfende Gas zu erwärmen. Das Rohrbündel ist bevorzugt in einem zwischen dem Kernrohr und dem Mantel vorgesehenen Spalt angeordnet. Vorzugsweise weist das Kernrohr einen ersten Kernrohrabschnitt und einen von dem ersten Kernrohrabschnitt getrennten zweiten Kernrohrabschnitt auf. Der erste Kernrohrabschnitt ist bevorzugt nicht mit dem Mantel sondern mit einem Deckel des Mantels verbunden, so dass der erste Kernrohrabschnitt mit dem Rohrbündel aus dem Mantel herausziehbar ist. Das Rohrbündel ist insbesondere auf das Kernrohr und insbesondere auf den ersten Kernrohrabschnitt des Kernrohrs aufgewickelt.

Gemäß einer weiteren Ausführungsform umfasst die Umschalteinrichtung eine erste Rückschlagklappe, die in dem Wasserkreislauf der ersten Heizeinrichtung angeordnet ist.

Die Umschalteinrichtung umfasst vorzugsweise auch die Umwälzpumpe des Wasserkreislaufs der ersten Heizeinrichtung. Die Rückschlagklappe ist vorzugsweise als Rückschlagventil ausgebildet. Die Rückschlagklappe kann auch ein derartiges Bauteil sein, das mit Hilfe der Umschalteinrichtung aktiv angesteuert werden kann, beispielsweise ein Magnetventil. Bevorzugt ist die Rückschlagklappe jedoch ein passives Bauteil, das den Wasserkreislauf je nach der Strömungsrichtung des Wassers blockiert oder freigibt. Die Umschalteinrichtung kann auch eine Steuereinrichtung umfassen, die dazu eingerichtet ist, die Umwälzpumpe des Wasserkreislaufs der ersten Heizeinrichtung und eine Umwälzpumpe eines Wasserkreislaufs der zweiten Heizeinrichtung anzusteuern. Je nachdem, welche Umwälzpumpe angesteuert wird, ist entweder die erste Heizeinrichtung oder die zweite Heizeinrichtung aktiviert.

Gemäß einer weiteren Ausführungsform weist der Wasserkreislauf der ersten Heizeinrichtung einen an dem Mantel vorgesehenen ersten Wasserstutzen und einen an dem Mantel vorgesehenen zweiten Wasserstutzen auf.

Bezüglich der Schwerkraftrichtung ist der erste Wasserstutzen unterhalb des zweiten Wasserstutzens angeordnet. Zwischen dem ersten Wasserstutzen und dem zweiten Wasserstutzen sind eine Verrohrung und die Umwälzpumpe angeordnet. Beispielsweise sind die Wasserstutzen in eine Seitenwandung des Mantels des Wasserbadverdampfers eingeschweißt.

Gemäß einer weiteren Ausführungsform weist die zweite Heizeinrichtung einen Wasserkreislauf mit einer Umwälzpumpe zum Umwälzen von erwärmtem Wasser auf. Die zweite Heizeinrichtung kann auch ein Heizelement zum Aufheizen des Wassers aufweisen. Das Heizelement kann beispielsweise eine Gasheizung oder dergleichen sein.

Gemäß einer weiteren Ausführungsform umfasst die Umschalteinrichtung eine zweite Rückschlagklappe, die in dem Wasserkreislauf der zweiten Heizeinrichtung angeordnet ist.

Die zweite Rückschlagklappe ist dazu eingerichtet, den Wasserkreislauf der zweiten Heizeinrichtung zu blockieren, wenn die Umwälzpumpe des Wasserkreislaufs der ersten Heizeinrichtung in Betrieb ist und umgekehrt.

Gemäß einer weiteren Ausführungsform weist der Wasserkreislauf der zweiten Heizeinrichtung einen an dem Mantel vorgesehenen ersten Wasserstutzen und einen an dem Mantel vorgesehenen zweiten Wasserstutzen auf.

Das heißt, sowohl der Wasserkreislauf der ersten Heizeinrichtung als auch der Wasserkreislauf der zweiten Heizeinrichtung weisen jeweils einen ersten Wasserstutzen und einen zweiten Wasserstutzen auf. Die Wasserstutzen sind insbesondere in die Seitenwandung des Mantels eingeschweißt.

Gemäß einer weiteren Ausführungsform ist der Wasserkreislauf der zweiten Heizeinrichtung an einen Wasserkreislauf der ersten Heizeinrichtung angeschlossen.

Hierdurch kann auf das Anbringen von Wasserstutzen für den Wasserkreislauf der zweiten Heizeinrichtung an dem Mantel verzichtet werden. Hierdurch vereinfacht sich der Aufbau des Wasserbadverdampfers.

Gemäß einer weiteren Ausführungsform weist der Wasserkreislauf der zweiten Heizeinrichtung einen an dem Wasserkreislauf der ersten Heizeinrichtung angeschlossenen ersten Wasserstutzen und einen an dem Wasserkreislauf der ersten Heizeinrichtung angeschlossenen zweiten Wasserstutzen auf.

Insbesondere ist der erste Wasserstutzen des Wasserkreislaufs der zweiten Heizeinrichtung direkt an den ersten Wasserstutzen des Wasserkreislaufs der ersten

Heizeinrichtung und der zweite Wasserstutzen des Wasserkreislaufs der zweiten Heizeinrichtung ist direkt an den Wasserkreislauf der ersten Heizeinrichtung angeschlossen. Hierdurch können beispielsweise vorgefertigte T-Stücke verwendet werden. Dies vereinfacht den Aufbau des Wasserbadverdampfers.

Gemäß einer weiteren Ausführungsform weisen die erste Heizeinrichtung und die zweite Heizeinrichtung einen gemeinsamen Wasserkreislauf mit einer Umwälzpumpe zum Umwälzen von erwärmtem Wasser auf.

Diese Ausführungsform des Wasserbadverdampfers kommt vorteilhafterweise dann zur Anwendung, wenn die Volumenströme des Wassers der ersten Heizeinrichtung und der zweiten Heizeinrichtung gleich sind. Hierdurch ergibt sich ein besonders einfacher Aufbau des Wasserbadverdampfers.

Gemäß einer weiteren Ausführungsform weist der gemeinsame Wasserkreislauf einen an dem Mantel vorgesehenen ersten Wasserstutzen und einen an dem Mantel vorgesehenen zweiten Wasserstutzen auf.

Die Wasserstutzen sind in die Seitenwandung des Behälters vorzugsweise eingeschweißt.

Gemäß einer weiteren Ausführungsform umfasst die Umschalteinrichtung ein Dreiwegeventil, das in dem gemeinsamen Wasserkreislauf angeordnet ist.

Mit Hilfe des Dreiwegeventils kann bei einem Ausfall der ersten Heizeinrichtung die zweite Heizeinrichtung zugeschaltet werden.

Gemäß einer weiteren Ausführungsform umfasst der Wasserbadverdampfer ferner ein Druckaufbaurohrbündel, das zwischen dem Kernrohr und dem Mantel angeordnet ist.

Das Druckaufbaurohrbündel ist vorzugsweise spiralgewickelt. Insbesondere ist das Druckaufbaurohrbündel auf das Kernrohr, insbesondere auf den zweiten Kernrohrabschnitt des Kernrohrs, aufgewickelt. Mit Hilfe des Druckaufbaurohrbündels kann einem Gastank entnommenes verflüssigtes Gas dem Wasserbadverdampfer zugeführt, dort verdampft und wieder dem Gastank zum Druckerhalt oder zum Druckaufbau in demselben zugeführt werden.

Weiterhin wird eine verfahrenstechnische Anlage mit einem derartigen Wasserbadverdampfer vorgeschlagen.

Die verfahrenstechnische Anlage ist insbesondere zur Verdampfung von verflüssigten Gasen eingerichtet. Die verfahrenstechnische Anlage kann mehrere derartige Wasserbadverdampfer umfassen. Die verfahrenstechnische Anlage kann den Gastank umfassen.

Weitere mögliche Implementierungen des Wasserbadverdampfers und/oder der verfahrenstechnischen Anlage umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zur jeweiligen Grundform des Wasserbadverdampfers und/oder der verfahrenstechnischen Anlage hinzufügen.

Weitere vorteilhafte Ausgestaltungen und Aspekte des Wasserbadverdampfers und/oder der verfahrenstechnischen Anlage sind Gegenstand der Unteransprüche sowie der im Folgenden beschriebenen Ausführungsbeispiele des Wasserbadverdampfers und/oder der verfahrenstechnischen Anlage. Im Weiteren werden der Wasserbadverdampfer und/oder die verfahrenstechnische Anlage anhand von bevorzugten Ausführungsformen unter Bezugnahme auf die beigelegten Figuren näher erläutert.
Fig. 1 zeigt eine schematische Ansicht einer Ausführungsform einer verfahrenstechnischen Anlage;
Fig. 2 zeigt eine schematische Ansicht einer Ausführungsform eines Wasserbadverdampfers für die verfahrenstechnische Anlage gemäß Fig. 1; und
Fig. 3 zeigt eine schematische Ansicht einer weiteren Ausführungsform eines Wasserbadverdampfers für die verfahrenstechnische Anlage gemäß Fig. 1.

In den Figuren sind gleiche oder funktionsgleiche Elemente mit denselben Bezugszeichen versehen worden, sofern nichts anderes angegeben ist.

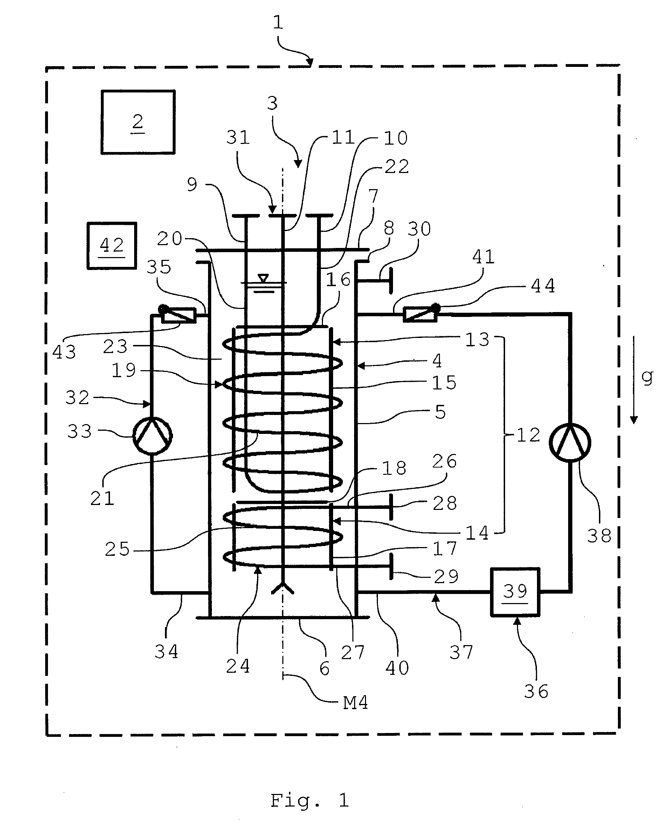

Die Fig. 1 zeigt eine schematische Ansicht einer Ausführungsform einer verfahrenstechnischen Anlage 1. Die verfahrenstechnische Anlage 1 kann eine petrochemische oder kryotechnische Anlage sein. Insbesondere kann die verfahrenstechnische Anlage 1 dazu eingesetzt werden, verflüssigte Gase, wie Sauerstoff, Stickstoff, Argon, Ethylen, Propylen oder Erdgas, zu verdampfen. Die verfahrenstechnische Anlage 1 umfasst einen Gastank 2 zur Aufnahme eines derartigen verflüssigten Gases.

Die verfahrenstechnische Anlage 1 umfasst weiterhin einen Wasserbadverdampfer 3, mit dessen Hilfe das aus dem Gastank 2 entnommene verflüssigte Gas verdampft wird. Ein Wasserbadverdampfer 3 ist insbesondere ein spiralgewickelter Wärmeaustauscher. Der Wasserbadverdampfer 3 umfasst einen rohrförmigen Mantel 4, der rotationssymmetrisch zu einer Symmetrie- oder Mittelachse M4 aufgebaut ist. Der Mantel 4 umfasst eine rohrförmige und rotationssymmetrisch zu der Mittelachse M4 aufgebaute Seitenwandung 5, die an einer Stirnseite mit Hilfe eines Bodens 6 fluiddicht verschlossen ist.

Unter "fluiddicht" ist vorliegend zu verstehen, dass zwischen der Seitenwandung 5 und dem Boden 6 eine Verbindung vorgesehen ist, die flüssigkeits- und/oder gasdicht ist. Die fluiddichte Verbindung kann eine stoffschlüssige Verbindung sein. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel oder der Verbindungspartner trennen lassen. Beispielsweise ist der Boden 6 mit der Seitenwandung 5 verschweißt.

Der Mantel 4 weist weiterhin einen ebenfalls stirnseitig an der Seitenwandung 5 vorgesehenen Deckel 7 auf, der von dem Mantel 4 trennbar ist. Beispielsweise ist der Deckel 7 mit einem an der Seitenwandung 5 vorgesehenen Flansch 8 verschraubt. Zwischen dem Deckel 7 und dem Flansch 8 kann eine Dichteinrichtung vorgesehen sein, um den Deckel 7 und den Flansch 8 fluiddicht miteinander zu verbinden. Der Mantel 4 kann beispielsweise aus Edelstahl oder aus einer Aluminiumlegierung gefertigt sein.

An dem Deckel 7 können mehrere Produktstutzen 9, 10 vorgesehen sein. Die Anzahl der Produktstutzen 9, 10 ist dabei beliebig. Beispielsweise kann durch einen der Produktstutzen 9, 10 dem Wasserbadverdampfer 3 das verflüssigte Gas zugeführt werden und über den anderen Produktestutzen 9, 10 das verdampfte Gas aus dem Wasserbadverdampfer 3 abgeführt werden. Die Produktstutzen 9, 10, beziehungsweise zumindest einer der Produktstutzen 9, 10, ist in Fluidverbindung mit dem Gastank 2. An dem Deckel 7 ist weiterhin eine Dampflanze 11 montiert, die in den Mantel 4 hineinragt. Die Dampflanze 11 endet kurz über dem Boden 6 des Mantels 4. Mit Hilfe der Dampflanze 11 kann sich in dem Mantel 4 befindliches Wasser erwärmt werden.

Der Wasserbadverdampfer 3 umfasst weiterhin ein innerhalb des Mantels 4 angeordnetes Kernrohr 12. Das Kernrohr 12 ist zweigeteilt. Das Kernrohr 12 umfasst einen ersten oder oberen Kernrohrabschnitt 13 und einen unteren oder zweiten Kernrohrabschnitt 14. Die Kernrohrabschnitte 13, 14 sind vorzugsweise nicht miteinander verbunden. Der erste Kernrohrabschnitt 13 weist eine rotationssymmetrisch zu der Mittelachse M4 ausgebildete Seitenwandung 15 auf, die oberseitig von einem Deckel 16 verschlossen ist. Beispielsweise ist der Deckel 16 mit der Seitenwandung 15 verschweißt. Der Deckel 16 ist fluiddicht mit der Seitenwandung 15 verbunden. An dem Deckel 16 können Entlüftungsöffnungen, beispielsweise Entlüftungsbohrungen, vorgesehen sein, die die Bildung von Luftblasen innerhalb des ersten Kernrohrabschnitts 13 beim Füllen desselben mit Wasser verhindern. Unterseitig, das heißt dem zweiten Kernrohrabschnitt 14 zugewandt, ist der erste Kernrohrabschnitt 13 offen. Der erste Kernrohrabschnitt 13 kann beispielsweise aus Edelstahl oder aus einer Aluminiumlegierung gefertigt sein.

Der zweite Kernrohrabschnitt 14 ist bezüglich einer Schwerkraftrichtung g unterhalb des ersten Kernrohrabschnitts 13 angeordnet. Der zweite Kernrohrabschnitt 14 weist, wie der erste Kernrohrabschnitt 13, eine rotationssymmetrisch zu der Mittelachse M4 ausgebildete Seitenwandung 17 auf, die oberseitig, das heißt, dem ersten Kernrohrabschnitt 13 zugewandt, mit Hilfe eines Deckels 18 verschlossen ist. Beispielsweise ist der Deckel 18 mit der Seitenwandung 17 verschweißt. An dem Deckel 18 können, wie an dem Deckel 16, Entlüftungsöffnungen, beispielsweise Entlüftungsbohrungen, vorgesehen sein, um den zweiten Kernrohrabschnitt 14 zu entlüften.

Der erste Kernrohrabschnitt 13 ist nicht mit dem Mantel 4 verbunden. Der erste Kernrohrabschnitt 13 kann jedoch mit dem Deckel 7 verbunden sein, so dass bei einem Abnehmen des Deckels 7 von dem Mantel 4 der erste Kernrohrabschnitt 13 aus dem Mantel 4 herausgezogen werden kann. Der zweite Kernrohrabschnitt 14 kann mit dem Mantel 4 verbunden sein.

Der Wasserbadverdampfer 3 umfasst weiterhin ein Rohrbündel 19, das auf das Kernrohr 12, insbesondere auf den ersten Kernrohrabschnitt 13, aufgewickelt ist. Das Rohrbündel 19 kann mehrlagig sein. Das heißt, es können mehrere Lagen an Rohrleitungen übereinander auf das Kernrohr 12 aufgewickelt sein. Eine Wicklungsrichtung der Lagen kann sich dabei voneinander unterscheiden. Insbesondere sind die Rohrleitungen spiralförmig auf das Kernrohr 12 aufgewickelt.

Die Produktstutzen 9, 10 stehen mit dem Rohrbündel 19 in Fluidverbindung. Beispielsweise kann der Produktstutzen 9 mit einer Rohrleitung 20 des Rohrbündels 19 in Fluidverbindung sein. Die Rohrleitung 20 kann dabei zumindest teilweise innerhalb des Kernrohrs 12 angeordnet sein. Die Rohrleitung 20 führt innerhalb des ersten Kernrohrabschnitts 13 in Richtung des zweiten Kernrohrabschnitts 14 und windet sich ausgehend von einem dem zweiten Kernrohrabschnitt 14 zugewandten Endabschnitt des ersten Kernrohrabschnitts 13 mit einer Spiralwicklung 21 entgegen der Schwerkraftrichtung g, um den ersten Kernrohrabschnitt 13 nach oben in Richtung des Deckels 16. Das Rohrbündel 19 steht mit einer Rohrleitung 22 mit dem Produktstutzen 10 in Fluidverbindung. Zwischen dem Mantel 4 und dem Kernrohr 12 kann ein Spalt 23 vorgesehen sein, in dem das Rohrbündel 19 zumindest abschnittsweise angeordnet ist.

Der Wasserbadverdampfer 3 umfasst weiterhin ein innerhalb des Mantels 4 angeordnetes Druckaufbaurohrbündel 24. Das Druckaufbaurohrbündel 24 ist zumindest abschnittsweise in dem Spalt 23 angeordnet. Insbesondere ist das Druckaufbaurohrbündel 24 zwischen dem Kernrohr 12, und insbesondere dem zweiten Kernrohrabschnitt 14, und dem Mantel 4 angeordnet. Bevorzugt ist das Druckaufbaurohrbündel 24 auf den zweiten Kernrohrabschnitt 14 aufgewickelt. Das Druckaufbaurohrbündel 24 umfasst eine auf den zweiten Kernrohrabschnitt 14 aufgewickelte Spiralwicklung 25, eine Rohrleitung 26 sowie eine Rohrleitung 27. Die Rohrleitung 26 ist mit einem an dem Mantel 4 vorgesehenen Produktstutzen 28 und die Rohrleitung 27 ist mit einem an dem Mantel 4 vorgesehenen Produktstutzen 29 in Fluidverbindung.

Die Produktstutzen 28, 29 sind mit dem Gastank 2 in Fluidverbindung. Beispielsweise kann über den Produktstutzen 29 aus dem Gastank verflüssigtes Gas abgezogen und dem Druckaufbaurohrbündel 24 zugeführt werden. Mit Hilfe des Druckaufbaurohrbündels 24 wird das verflüssigte Gas verdampft und über den Produktstutzen 28 wieder dem Gastank 2 zugeführt, um den Druck in dem Gastank 2 zu erhöhen oder aufrechtzuerhalten.

An dem Mantel 4 ist ferner ein Überlauf 30 vorgesehen, der eine maximale Füllhöhe des Mantels 4 mit Wasser definiert. Durch den Überlauf 30 kann Wasser aus dem Mantel 4 austreten.

Der Wasserbadverdampfer 3 umfasst weiterhin eine erste Heizeinrichtung 31 zum Erwärmen des Rohrbündels 19 sowie des Druckaufbaurohrbündels 24. Die erste Heizeinrichtung 31 umfasst die Dampflanze 11 sowie einen Wasserkreislauf 32. Der Wasserkreislauf 32 umfasst eine Umwälzpumpe 33 zum Umwälzen des mit Hilfe der Dampflanze 11 erwärmten Wassers. Der Wasserkreislauf 32 umfasst ferner einen an dem Mantel 4 vorgesehenen ersten Wasserstutzen 34 sowie einen an dem Mantel 4 vorgesehenen zweiten Wasserstutzen 35. Beispielsweise sind die Wasserstutzen 34, 35 in die Seitenwandung 5 des Mantels 4 eingeschweißt. Mit Hilfe der Umwälzpumpe 33 kann erwärmtes Wasser entgegen der Schwerkraftrichtung g von dem ersten Wasserstutzen 34 hin zu dem zweiten Wasserstutzen 35 gefördert werden.

Der Wasserbadverdampfer 3 umfasst weiterhin eine zweite Heizeinrichtung 36, die ebenfalls zum Erwärmen des Rohrbündels 19 sowie des Druckaufbaurohrbündels 24 geeignet ist. Die zweite Heizeinrichtung 36 umfasst einen Wasserkreislauf 37 mit einer Umwälzpumpe 38. Weiterhin kann die zweite Heizeinrichtung 36 ein optionales Heizelement 39 zum Erwärmen von Wasser aufweisen. Das Heizelement 39 kann beispielsweise eine Gas- oder Elektroheizung sein. Die zweite Heizeinrichtung 36 umfasst ferner einen an dem Mantel 4 vorgesehenen ersten Wasserstutzen 40 sowie einen an dem Mantel 4 vorgesehenen zweiten Wasserstutzen 41. Die Wasserstutzen 40, 41 sind beispielsweise in die Seitenwandung 5 des Mantels 4 eingeschweißt. Mit Hilfe der Umwälzpumpe 38 kann erwärmtes Wasser entgegen der Schwerkraftrichtung g von dem ersten Wasserstutzen 40 hin zu dem zweiten Wasserstutzen 41 gefördert werden.

Der Wasserbadverdampfer 3 umfasst weiterhin eine Umschalteinrichtung 42 zum wahlweisen Zuschalten der Heizeinrichtungen 31, 36, so dass im Betrieb des Wasserbadverdampfers 3 eine Erwärmung des Rohrbündels 19 sowie des Druckaufbaurohrbündels 24 wahlweise mit Hilfe der ersten Heizeinrichtung 31 oder der zweiten Heizeinrichtung 36 erfolgt. Die Umschalteinrichtung 42 kann auch dazu eingerichtet sein, die Heizeinrichtungen 31, 36 so zuzuschalten, dass im Betrieb des Wasserbadverdampfers 3 die Erwärmung des Rohrbündels 19 sowie des Druckaufbaurohrbündels 24 mit Hilfe beider Heizeinrichtungen 31, 36 erfolgt.

Die Umschalteinrichtung 42 umfasst eine erste Rückschlagklappe 43, die in dem Wasserkreislauf 32 der ersten Heizeinrichtung 31 angeordnet ist. Weiterhin umfasst die Umschalteinrichtung 42 eine zweite Rückschlagklappe 44, die in dem Wasserkreislauf 37 der zweiten Heizeinrichtung 36 angeordnet ist. Die Umschalteinrichtung 42 kann eine nicht gezeigte Steuereinrichtung zum Ansteuern der Umwälzpumpen 33, 38 umfassen. Die Rückschlagklappen 43, 44 können als Rückschlagventile ausgebildet sein. Die Umschalteinrichtung 42 kann die Umwälzpumpen 33, 38 umfassen.

Im Betrieb des Wasserbadverdampfers 3 kann dem Wasserbadverdampfer 3 das verflüssigte Gas von dem Gastank 2 über den ersten Produktstutzen 9 zugeführt werden. Das verflüssigte Gas wird über die Rohrleitung 20 zunächst in der Schwerkraftrichtung g nach unten in Richtung des Bodens 6 des Mantels 4 geführt und der Spiralwicklung 21 zugeführt. In der Spiralwicklung 21 strömt das zu verflüssigende Gas entgegen der Schwerkraftrichtung g außenseitig an dem Kernrohr 12 nach oben, wobei es durch in dem Spalt 23 in der Schwerkraftrichtung g nach unten strömendem Wasser erwärmt wird. Hierbei verdampft das zu verflüssigende Gas und kann über die Rohrleitung 22 und den zweiten Produktstutzen 10 abgeführt werden. Alternativ kann das zu verdampfende Gas auch in umgekehrter Richtung durch den Wasserbadverdampfer 3 hindurchgeführt werden.

Zum Erwärmen des Wassers kann wahlweise die erste Heizeinrichtung 31 oder die zweite Heizeinrichtung 36 eingesetzt werden. Für den Fall, dass die erste Heizeinrichtung 31 eingesetzt wird, wird das sich in dem Wasserbadverdampfer 3 befindliche Wasser, das den Mantel 4 bis auf Höhe des Überlaufs 30 auffüllen kann, mit Hilfe der Dampflanze 11 erwärmt. Die Umwälzpumpe 33 fördert das erwärmte Wasser dabei von dem ersten Wasserstutzen 34 entgegen der Schwerkraftrichtung g nach oben zu dem zweiten Wasserstutzen 35, um dann in dem Spalt 23 in der Schwerkraftrichtung g nach unten zu strömen, wobei die Spiralwicklungen 21, 25 des Rohrbündels 19 sowie des Druckaufbaurohrbündels 24 überströmt werden. Die Dampflanze 11 düst den Dampf direkt in das Wasser ein, um das Wasser zu erwärmen. Die Dampfzuspeisung kann mit Hilfe eines Temperaturreglers angepasst werden. Im Standby-Betrieb kann die Wassertemperatur mit einer kleinen, nicht gezeigten, Dampflanze beispielsweise auf 60 °C gehalten werden.

Für den Fall, dass die Beheizung des Wassers mit Hilfe der ersten Heizeinrichtung 31 nicht möglich ist, beispielsweise bei einem Ausfall der Dampfversorgung der Dampflanze 11, kann mit Hilfe der Umschalteinrichtung 42 die erste Heizeinrichtung 31 ab- und die zweite Heizeinrichtung 36 zugeschaltet werden. Hierzu wird die Umwälzpumpe 33 abgeschaltet und die Umwälzpumpe 38 eingeschaltet. Mit Hilfe der Umwälzpumpe 38 kann mit Hilfe des Heizelements 39 erwärmtes Wasser von dem ersten Wasserstutzen 40 entgegen der Schwerkraftrichtung g zu dem zweiten Wasserstutzen 41 gepumpt werden. Das erwärmte Wasser strömt von dem zweiten Wasserstutzen 41 in dem Spalt 23 in der Schwerkraftrichtung g nach unten, wobei es über die Spiralwicklung 21 des Rohrbündels 19 und die Spiralwicklung 25 des Druckaufbaurohrbündels 24 strömt.

Um zu verhindern, dass das von der Umwälzpumpe 38 geförderte Wasser in den Wasserkreislauf 32 der ersten Heizeinrichtung 31 eindringt, ist an dem zweiten Wasserstutzen 34 des Wasserkreislaufs 32 die erste Rückschlagklappe 43 vorgesehen. Weiterhin ist umgekehrt bei einem Betrieb der ersten Heizeinrichtung 31 mit Hilfe der zweiten Rückschlagklappe 44 gesichert, dass das von der Umwälzpumpe 33 geförderte Wasser nicht in den Wasserkreislauf 37 der zweiten Heizeinrichtung 36 eindringt.

Dadurch, dass zwei unterschiedliche Wasserkreisläufe 32, 37 für die Heizeinrichtungen 31, 36 vorgesehen sind, können die erste Heizeinrichtung 31 und die zweite Heizeinrichtung 36 mit stark unterschiedlichen Volumenströmen betrieben werden. Dies ist insbesondere vorteilhaft, wenn die beiden Wasserkreisläufe 32, 37 Wasser mit stark unterschiedlichen Temperaturen fördern.

Der Wasserbadverdampfer 3 kann vorteilhafterweise mit Dampf oder Warm-/ Kaltwasser ohne Umbaumaßnahmen und ohne Unterbrechung der Versorgung betrieben werden. Ein Backup-System für die Heizenergie ist gegeben. Ein Wechsel der Heizenergie während des Betriebs des Wasserbadverdampfers 3 ist ohne Unterbrechung der Versorgung möglich. Hierdurch kann auf eine bauliche Veränderung des Wasserbadverdampfers 3 während des Betriebs verzichtet werden.

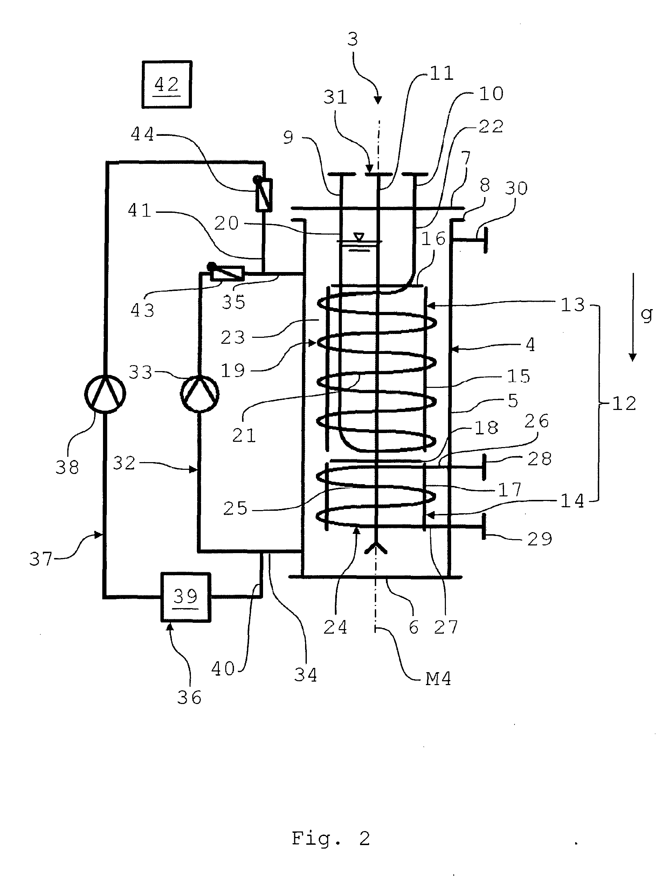

Die Fig. 2 zeigt eine weitere Ausführungsform eines Wasserbadverdampfers 3. Die Ausführungsform des Wasserbadverdampfers 3 gemäß der Fig. 2 unterscheidet sich von der Ausführungsform des Wasserbadverdampfers 3 gemäß der Fig. 1 dadurch, dass der Wasserkreislauf 37 der zweiten Heizeinrichtung 36 an den Wasserkreislauf 32 der ersten Heizeinrichtung 31 angeschlossen ist. Hierzu ist der erste Wasserstutzen 40 der zweiten Heizeinrichtung 36 direkt an den ersten Wasserstutzen 34 der ersten Heizeinrichtung 31 und der zweite Wasserstutzen 41 der zweiten Heizeinrichtung 36 direkt an den zweiten Wasserstutzen 35 des Wasserkreislaufs 32 der ersten Heizeinrichtung 31 angeschlossen. Hierdurch kann auf das Anbringen zusätzlicher Wasserstutzen für den Wasserkreislauf 37 an den Mantel 4 verzichtet werden. Die Funktionsweise des Wasserbadverdampfers 3 gemäß der Fig. 2 entspricht der Funktionsweise des Wasserbadverdampfers 3 gemäß der Fig. 1.

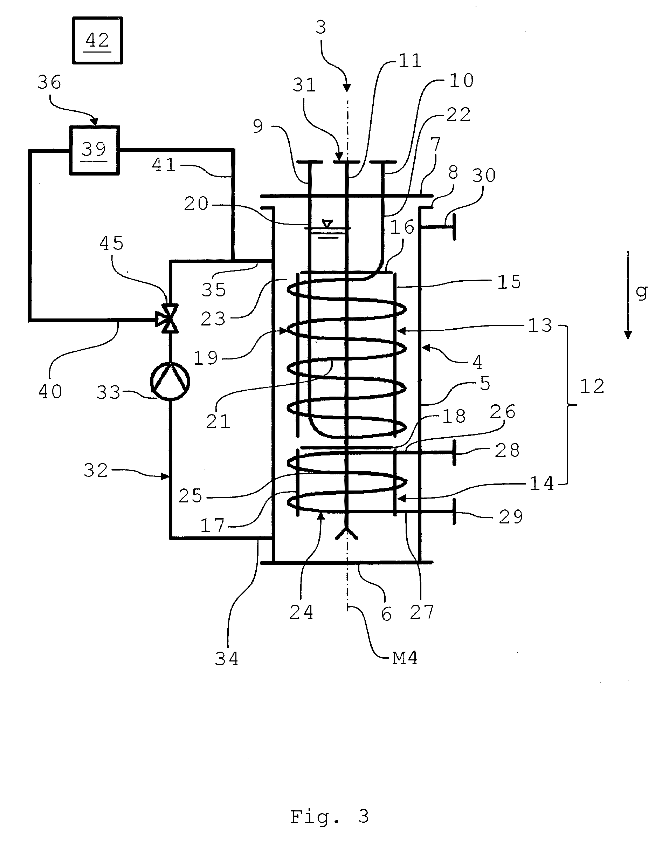

Die Fig. 3 zeigt eine weitere Ausführungsform eines Wasserbadverdampfers 3. Die Ausführungsform des Wasserbadverdampfers 3 gemäß der Fig. 3 unterscheidet sich von der Ausführungsform des Wasserbadverdampfers 3 gemäß der Fig. 1 dadurch, dass die erste Heizeinrichtung 31 und die zweite Heizeinrichtung 36 einen gemeinsamen Wasserkreislauf 32 mit nur einer Umwälzpumpe 33 zum Umwälzen des erwärmten Wassers aufweisen. Der gemeinsame Wasserkreislauf 32 umfasst ein Dreiwegeventil 45, das in dem gemeinsamen Wasserkreislauf 32 angeordnet ist. Mit Hilfe des Dreiwegeventils 45, das der Umschalteinrichtung 42 zugeordnet ist, kann zwischen der Beheizung mittels Dampflanze 11 oder der Beheizung mittels Heizelement 39 umgeschaltet werden. Diese Ausführungsform des Wasserbadverdampfers 3 ist insbesondere vorteilhafterweise verwendbar, wenn die Volumenströme an Wasser, die mit Hilfe der Dampflanze 11 und des Heizelements 39 erwärmt werden, gleich groß oder zumindest annähernd gleich groß sind.

Obwohl die vorliegende Erfindung anhand von Ausführungsbeispielen beschrieben wurde, ist sie vielfältig modifizierbar.

### Verwendete Bezugszeichen

- 1: verfahrenstechnische Anlage
- 2: Gastank
- 3: Wasserbadverdampfer
- 4: Mantel
- 5: Seitenwandung
- 6: Boden
- 7: Deckel
- 8: Flansch
- 9: Produktstutzen
- 10: Produktstutzen
- 11: Dampflanze
- 12: Kernrohr
- 13: Kernrohrabschnitt
- 14: Kernrohrabschnitt
- 15: Seitenwandung
- 16: Deckel
- 17: Seitenwandung
- 18: Deckel
- 19: Rohrbündel
- 20: Rohrleitung
- 21: Spiralwicklung
- 22: Rohrleitung
- 23: Spalt
- 24: Druckaufbaurohrbündel
- 25: Spiralwicklung
- 26: Rohrleitung
- 27: Rohrleitung
- 28: Produktstutzen
- 29: Produktstutzen
- 30: Überlauf
- 31: Heizeinrichtung
- 32: Wasserkreislauf
- 33: Umwälzpumpe
- 34: Wasserstutzen
- 35: Wasserstutzen
- 36: Heizeinrichtung
- 37: Wasserkreislauf
- 38: Umwälzpumpe
- 39: Heizelement
- 40: Wasserstutzen
- 41: Wasserstutzen
- 42: Umschalteinrichtung
- 43: Rückschlagklappe
- 44: Rückschlagklappe
- 45: Dreiwegeventil

- g: Schwerkraftrichtung
- M4: Mittelachse

## Patentansprüche

1. Wasserbadverdampfer (3) für eine verfahrenstechnische Anlage (1), mit einem Mantel (4), einem innerhalb des Mantels (4) angeordneten Kernrohr (12), einem zwischen dem Kernrohr (12) und dem Mantel (4) angeordneten Rohrbündel (19), einer ersten Heizeinrichtung (31) zum Erwärmen des Rohrbündels (19), einer zweiten Heizeinrichtung (36) zum Erwärmen des Rohrbündels (19) und einer Umschalteinrichtung (42) zum wahlweisen Zuschalten der Heizeinrichtungen (31, 36), so dass im Betrieb des Wasserbadverdampfers (3) eine Erwärmung des Rohrbündels (19) wahlweise mit Hilfe der ersten Heizeinrichtung (31) oder der zweiten Heizeinrichtung (36) erfolgt.

2. Wasserbadverdampfer nach Anspruch 1, wobei die erste Heizeinrichtung (31) eine Dampflanze (11) zum Erwärmen von in dem Wasserbadverdampfer (3) aufgenommenen Wasser aufweist.

3. Wasserbadverdampfer nach Anspruch 2, wobei die erste Heizeinrichtung (31) einen Wasserkreislauf (32) mit einer Umwälzpumpe (33) zum Umwälzen des mit Hilfe der Dampflanze (11) erwärmten Wassers aufweist.

4. Wasserbadverdampfer nach Anspruch 3, wobei die Umschalteinrichtung (42) eine erste Rückschlagklappe (43) umfasst, die in dem Wasserkreislauf (32) der ersten Heizeinrichtung (31) angeordnet ist.

5. Wasserbadverdampfer nach Anspruch 3 oder 4, wobei der Wasserkreislauf (32) der ersten Heizeinrichtung (31) einen an dem Mantel (4) vorgesehenen ersten Wasserstutzen (34) und einen an dem Mantel (4) vorgesehenen zweiten Wasserstutzen (35) aufweist.

6. Wasserbadverdampfer nach einem der Ansprüche 1 - 5, wobei die zweite Heizeinrichtung (36) einen Wasserkreislauf (37) mit einer Umwälzpumpe (38) zum Umwälzen von erwärmtem Wasser aufweist.

7. Wasserbadverdampfer nach Anspruch 6, wobei die Umschalteinrichtung (42) eine zweite Rückschlagklappe (44) umfasst, die in dem Wasserkreislauf (37) der zweiten Heizeinrichtung (36) angeordnet ist.

8. Wasserbadverdampfer nach Anspruch 6 oder 7, wobei der Wasserkreislauf (37) der zweiten Heizeinrichtung (36) einen an dem Mantel (4) vorgesehenen ersten Wasserstutzen (40) und einen an dem Mantel (4) vorgesehenen zweiten Wasserstutzen (41) aufweist.

9. Wasserbadverdampfer nach Anspruch 6 oder 7, wobei der Wasserkreislauf (37) der zweiten Heizeinrichtung (36) an einen Wasserkreislauf (32) der ersten Heizeinrichtung (31) angeschlossen ist.

10. Wasserbadverdampfer nach Anspruch 9, wobei der Wasserkreislauf (37) der zweiten Heizeinrichtung (36) einen an den Wasserkreislauf (32) der ersten Heizeinrichtung (31) angeschlossenen ersten Wasserstutzen (40) und einen an den Wasserkreislauf (32) der ersten Heizeinrichtung (31) angeschlossenen zweiten Wasserstutzen (41) aufweist.

11. Wasserbadverdampfer nach einem der Ansprüche 1 - 5, wobei die erste Heizeinrichtung (31) und die zweite Heizeinrichtung (36) einen gemeinsamen Wasserkreislauf (32) mit einer Umwälzpumpe (33) zum Umwälzen von erwärmtem Wasser aufweisen.

12. Wasserbadverdampfer nach Anspruch 11, wobei der gemeinsame Wasserkreislauf (32) einen an dem Mantel (4) vorgesehenen ersten Wasserstutzen (34) und einen an dem Mantel (4) vorgesehenen zweiten Wasserstutzen (35) aufweist.

13. Wasserbadverdampfer nach Anspruch 11 oder 12, wobei die Umschalteinrichtung (42) ein Dreiwegeventil (45) umfasst, das in dem gemeinsamen Wasserkreislauf (32) angeordnet ist.

14. Wasserbadverdampfer nach einem der Ansprüche 1 - 13, ferner umfassend ein Druckaufbaurohrbündel (24), das zwischen dem Kernrohr (12) und dem Mantel (4) angeordnet ist.

15. Verfahrenstechnische Anlage (1) mit einem Wasserbadverdampfer (3) nach einem der Ansprüche 1 - 14.
